(19) Europäisches Patentamt
European Patent Office
Office européen des brevets

(11) **EP 4 130 904 A1**

(12) **EUROPEAN PATENT APPLICATION**
published in accordance with Art. 153(4) EPC

(43) Date of publication:
**08.02.2023 Bulletin 2023/06**

(21) Application number: **20927905.8**

(22) Date of filing: **25.03.2020**

(51) International Patent Classification (IPC):
**G05B 19/418** (1995.01)

(52) Cooperative Patent Classification (CPC):
**G05B 19/418**

(86) International application number:
**PCT/JP2020/013460**

(87) International publication number:
**WO 2021/192119 (30.09.2021 Gazette 2021/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Sony Group Corporation**
**Minato-Ku, Tokyo, 108-0075 (JP)**

(72) Inventors:
- **MURABAYASHI, Noboru**
  **Tokyo 140-0002 (JP)**
- **TOKITA, Takeshi**
  **Tokyo 140-0002 (JP)**

(74) Representative: **D Young & Co LLP**
**120 Holborn**
**London EC1N 2DY (GB)**

(54) **INFORMATION PROCESSING DEVICE, PROGRAM, AND METHOD**

(57) Provided is an information processing apparatus including an acquisition unit that acquires a plurality of captured images from a captured moving image of a predetermined work, a decision unit that decides a reference image serving as a reference from the captured images, a calculation unit that calculates a first inter-image distance between the reference image and another image of the captured images, and a selection unit that selects an input image to be used as training data of machine learning from the captured images based on the first inter-image distance. The information processing apparatus is capable of efficiently collecting less biased training data from the captured moving image.

FIG.7

**Description**

Field

The present disclosure relates to an information processing apparatus, a program, and a method.

Background

In a manufacturing site where a worker repeatedly performs a predetermined work based on a work procedure manual, an irregular operation or the like is detected by photographing a moving image of the manufacturing work, so as to improve efficiency of the work, quality, or safety management. For example, whether the worker is performing the work according to the work procedure manual is determined by detecting a work state of the worker in the moving image captured as an object by using machine learning.

Citation List

Patent Literature

Patent Literature 1: JP 2018-163556 A
Patent Literature 2: JP 2019-101516 A

Summary

Technical Problem

However, there are objects that do not appear frequently compared to objects that frequently appear in the captured moving image. Since machine learning for detecting an object uses the captured moving image (image) as training data for learning, a difference in appearance frequency of objects causes bias in the training data of machine learning. For example, only training data of objects that frequently appear in the captured moving image is collected. This adversely affects accuracy of the machine learning because the machine learning is performed using similar training data.

Therefore, the present disclosure proposes an information processing apparatus, a program, and a method capable of efficiently collecting training data with less bias from the captured moving image.

Solution to Problem

The present disclosure proposes an information processing apparatus including an acquisition unit configured to acquire a plurality of captured images from a captured moving image of a predetermined work, a decision unit configured to decide a reference image serving as a reference from the plurality of captured images, a calculation unit configured to calculate a first inter-image distance between the reference image and another image of the plurality of captured images, and a selection unit configured to select an input image to be used as training data of machine learning from the plurality of captured images, the input image being selected based on the first inter-image distance.

The present disclosure proposes an information processing apparatus including an acquisition unit configured to acquire a plurality of captured images from a captured moving image of a predetermined work, a decision unit configured to decide, from the plurality of captured images, one of the plurality of captured images corresponding to a start time of the predetermined work, according to a predetermined work procedure manual, as a reference image, a detection unit configured to detect an object from the plurality of captured images, and a selection unit configured to select an input image to be used as training data of machine learning from the plurality of captured images including the object between the start time and an end time of the predetermined work according to the work procedure manual.

The present disclosure proposes an information processing apparatus including, an acquisition unit configured to acquire a plurality of captured images from a captured moving image of a predetermined work, a detection unit configured to detect a worker of the predetermined work, and detect an object from the plurality of captured images, a determination unit configured to determine whether the worker has changed, and a selection unit configured to select, in a case where it is determined that the worker has changed, an input image to be used as training data of machine learning from the plurality of captured images including the object at and after a time point at which it is determined that the worker has changed.

The present disclosure proposes a program causing an information processing apparatus to execute, acquiring a plurality of captured images from a captured moving image of a predetermined work, deciding a reference image serving as a reference from the plurality of captured images, calculating a first inter-image distance between the reference image and another image of the plurality of captured images, and selecting an input image to be used as training data of machine learning from the plurality of captured images, the input image being selected based on the first inter-image distance.

The present disclosure proposes a method using an information processing apparatus to implement, acquiring a plurality of captured images from a captured moving image of a predetermined work, deciding a reference image serving as a reference from the plurality of captured images, calculating a first inter-image distance between the reference image and another image of the plurality of captured images, and selecting an input image to be used as training data of machine learning from the plurality of captured images, the input image being selected based on the first inter-image distance.

The present disclosure proposes a program causing an information processing apparatus to execute, acquiring a plurality of captured images from a captured moving image of a predetermined work according to a predetermined work procedure manual, deciding, from the plurality of captured images, one of the plurality of captured images corresponding to a start time of the predetermined work, according to the work procedure manual, as a reference image, detecting an object from the plurality of captured images, and selecting an input image to be used as training data of machine learning from the plurality of captured images including the object between the start time and an end time of the predetermined work according to the work procedure manual.

The present disclosure proposes a method using an information processing apparatus to implement, acquiring a plurality of captured images from a captured moving image of a predetermined work according to a predetermined work procedure manual, deciding, from the plurality of captured images, one of the plurality of captured images corresponding to a start time of the predetermined work, according to the work procedure manual, as a reference image, detecting an object from the plurality of captured images, and selecting an input image to be used as training data of machine learning from the plurality of captured images including the object between the start time and an end time of the predetermined work according to the work procedure manual.

The present disclosure proposes a program causing an information processing apparatus to execute, acquiring a plurality of captured images from a captured moving image of a predetermined work, detecting a worker of the predetermined work, detecting an object from the plurality of captured images, determining whether the worker has changed, and selecting, in a case where it is determined that the worker has changed, an input image to be used as training data of machine learning from the plurality of captured images including the object at and after a time point at which it is determined that the worker has changed.

The present disclosure proposes a method using an information processing apparatus to implement, acquiring a plurality of captured images from a captured moving image of a predetermined work, detecting a worker of the predetermined work, detecting an object from the plurality of captured images, determining whether the worker has changed, and selecting, in a case where it is determined that the worker has changed, an input image to be used as training data of machine learning from the plurality of captured images including the object at and after a time point at which it is determined that the worker has changed.

Brief Description of Drawings

FIG. 1 is a block diagram illustrating a functional configuration example of an information processing apparatus 100 according to the present embodiment.
FIG. 2 is a diagram illustrating an example of work procedure manual data according to the embodiment.
FIG. 3 is a diagram illustrating an example of keyword extraction from the work procedure manual data according to the embodiment.
FIG. 4 is a diagram illustrating an example of an object detection model according to the embodiment.
FIG. 5 is a table illustrating an example of a class table according to the embodiment.
FIG. 6 is a diagram illustrating an example of a graph representing an inter-image distance from a reference image according to the embodiment.
FIG. 7 is a diagram illustrating an example of selection of captured images with less bias as training data according to the embodiment.
FIG. 8 is a diagram illustrating another example of the selection of captured images with less bias as the training data according to the embodiment.
FIG. 9 is a diagram illustrating an example of a method of calculating the inter-image distance in an entire image according to the embodiment.

FIG. 10 is a diagram illustrating an example of a method of calculating the inter-image distance in a partial image according to the embodiment.

FIG. 11 is a flowchart illustrating a flow of a captured image selection process with less bias as the training data according to the embodiment.

FIG. 12 is a diagram illustrating first modification to the selection of captured images with less bias as the training data according to the embodiment.

FIG. 13 is a diagram illustrating second modification to the selection of captured images with less bias as the training data according to the embodiment.

FIG. 14 is a block diagram illustrating a hardware configuration example of the information processing apparatus 100 according to the embodiment.

Description of Embodiments

Hereinafter, the present embodiment will be detailed with reference to the drawings. Note that, in the present specification and the drawings, substantially the same parts are given the same reference signs to omit duplicate description.

The description will be given in the following order.

1. Embodiment

    1.1. Functional configuration example
    1.2. Details of functions
    1.3. Functional flow

2. Modification of embodiment

    2.1. First modification
    2.2. Second modification

3. Hardware configuration example
4. Summary

<1. Embodiment>

<<1.1. Functional configuration example>>

First, a functional configuration example of an information processing apparatus 100 according to the present embodiment will be described. The information processing apparatus 100 may be a server apparatus managed by a manufacturer or the like who performs manufacturing work, or may be a stationary terminal or a notebook personal computer (PC). Furthermore, the information processing apparatus 100 may be a cloud server apparatus or a distributed computing system including a plurality of computers.

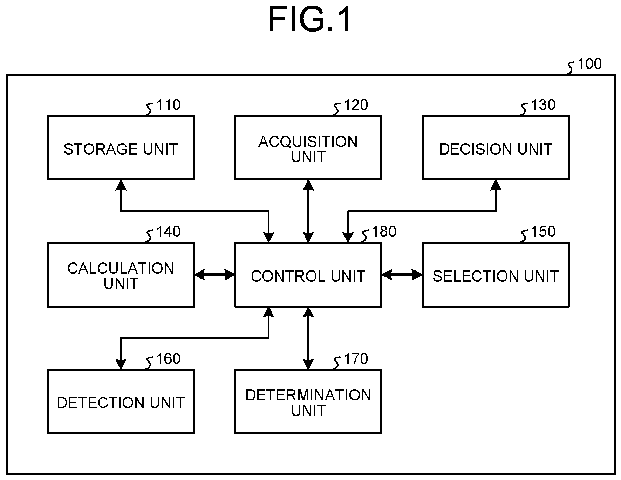

FIG. 1 is a block diagram illustrating a functional configuration example of the information processing apparatus 100 according to the present embodiment. As illustrated in FIG. 1, the information processing apparatus 100 according to the present embodiment includes a storage unit 110, an acquisition unit 120, a decision unit 130, a calculation unit 140, a selection unit 150, a detection unit 160, a determination unit 170, and a control unit 180.

(Storage unit 110)

The storage unit 110 according to the present embodiment is a storage area for temporarily or permanently storing various programs and data. The storage unit 110 may store programs and data for the information processing apparatus 100 to execute various functions. As a specific example, the storage unit 110 may store a program and data for calculating an inter-image distance, work procedure manual data indicating a work procedure for each work, a learning model for detecting an object from a captured moving image, definition data of the object, management data for managing various settings, and the like. Obviously, the above is merely an example, and the type of data stored in the storage unit 110 is not particularly limited.

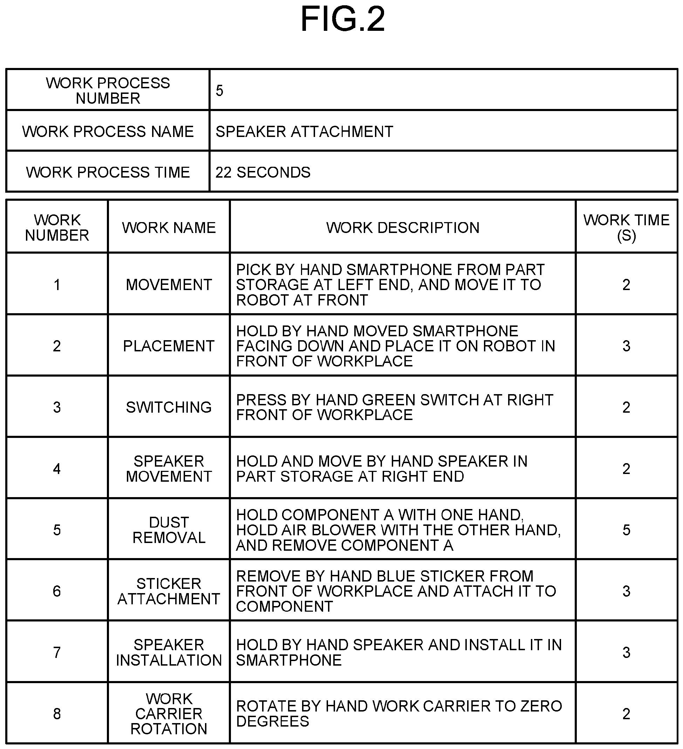

FIG. 2 is a diagram illustrating an example of the work procedure manual data according to the present embodiment. FIG. 2 is, for example, the work procedure manual data indicating a work procedure for "speaker attachment" that is one process among a plurality of work processes forming the manufacturing work for smartphones. For example, as illustrated in FIG. 2, the work procedure in the work process of "speaker attachment" proceeds in the order of work numbers such as "1: Movement" → "2: Placement" → "3: Switching " → and so on. In addition, the work time can be set for each work. Based on the above work procedure manual data, it is possible to determine whether or not a worker is performing the work according to the work procedure manual within the work time by matching an object detected as a work state of the worker from the captured moving image with a keyword extracted from a work description.

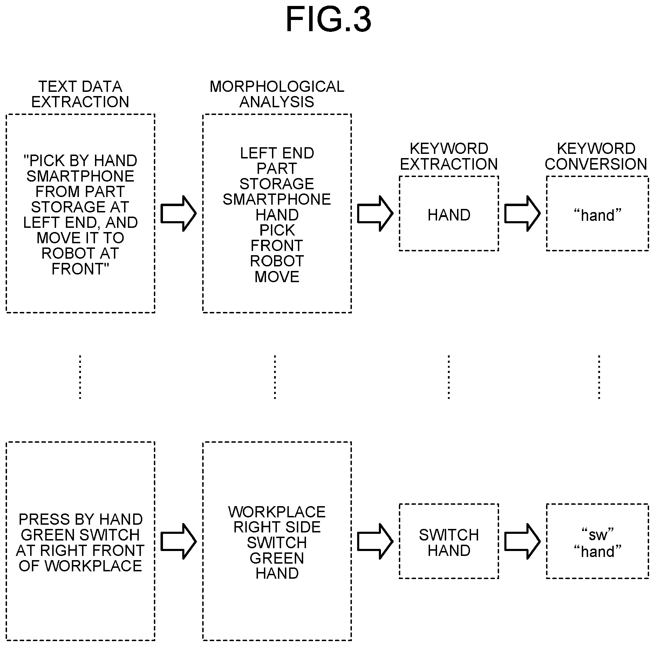

In order to extract the keyword from the work procedure manual data, morphological analysis can be used. FIG. 3 is a diagram illustrating an example of keyword extraction from the work procedure manual data according to the present embodiment. As illustrated in FIG. 3, first, the information processing apparatus 100 extracts text data of the "work description" from the work procedure manual data illustrated in FIG. 2. Next, the information processing apparatus 100 performs the morphological analysis on the extracted text data to extract the keyword from the data after the morphological analysis. As a result, for example, a keyword "hand" is extracted from the text data of the work description of Work No. 1: Movement, and keywords "switch" and "hand" are extracted from the text data of the work description of Work No. 3: Switching. Next, the information processing apparatus 100 converts the keywords extracted. For example, the keyword "hand" is converted into "hand", and the keyword "switch" is converted into "sw". The "hand" after conversion is a label given to the object as described later. The information processing apparatus 100 converts the keywords extracted from the work procedure manual in order to match the objects with the keywords extracted from the work description.

(Acquisition unit 120)

Returning to FIG. 1, the acquisition unit 120 according to the present embodiment acquires a plurality of captured images from the captured moving image of a predetermined work. Each of the images acquired is an image for each frame of the captured moving image. Here, the "work" targeted in the present embodiment is, for example, a product manufacturing work performed by a worker in a factory, a line, or the like. Taking the manufacturing work (speaker attachment work) for smartphones as an example, the "work" includes, for example, movement, placement, switching, speaker movement, dust removal, sticker attachment, speaker installation, and work carrier rotation. Note that the "work" is not limited to the speaker attachment work, and may be another work in the manufacture of smartphones. Still more, the "work" is not limited to the manufacturing work for smartphones, and may be the manufacturing work for other products. Further, the "work" is not limited to the manufacturing work for products, and may be, for example, work in a service such as a nursing care service.

(Decision unit 130)

The decision unit 130 according to the present embodiment determines a reference image serving as a reference from the captured images acquired by the acquisition unit 120. For example, a time when the detection unit 160, described later, detects the object from the captured images is determined as a work start time, and a frame at that time can be used as the reference image. Alternatively, the captured image corresponding to the start of the predetermined work can be determined as the reference image based on the work procedure manual data stored in the storage unit 110.

(Calculation Unit 140)

The calculation unit 140 according to the present embodiment calculates an inter-image distance (corresponding to a first inter-image distance) between the reference image determined by the decision unit 130 and each of the captured images acquired by the acquisition unit 120. In addition, the calculation unit 140 divides a calculated maximum inter-image distance at a predetermined interval, thereby calculating an inter-image distance (corresponding to a second inter-image distance) between each division point and the reference image decided by the decision unit 130. Here, the predetermined interval is determined based on the number of images desired to be selected from the captured moving image, so as to be used as the training data of machine learning for detecting the object. For example, when the number of images to be selected is four, an interval obtained by dividing the calculated maximum inter-image distance by three (e.g., three equal parts) is the predetermined interval. Note that the inter-image distance calculated by the calculation unit 140 is a sum of the magnitudes of differences in RGB values and the luminance values of pixels between the images. In other words, the larger the difference, the larger the inter-image distance, and the images are not similar to each other.

(Selection Unit 150)

The selection unit 150 according to the present embodiment selects input images to be used as the training data of machine learning for detecting the object from the captured images acquired by the acquisition unit 120 based on the inter-image distance calculated by the calculation unit 140. Here, since the selected captured images are used as the training data of machine learning, it is preferable that the inter-image distance between the captured images is large and varied. Therefore, the selection unit 150 selects the reference image decided by the decision unit 130 and images that are not similar to the reference image and have the inter-image distance with the predetermined interval. The selected images are, for example, the captured images having a distance same as or closest to the inter-image distance at each of the division points obtained by dividing the maximum inter-image distance calculated by the calculation unit 140 at the predetermined interval. In addition, since the selected images are used as the training data of machine learning for detecting the object, the selected images need to be images including the object.

Furthermore, based on the work procedure manual data stored in the storage unit 110, the selection unit 150 can also select the input images to be used as the training data of machine learning from the captured images between the start and the end of work (first modification described later).

Furthermore, the selection unit 150 can also select the input images to be used as the training data of machine learning from the captured images after a time point at which the determination unit 170 determines that the worker has changed (second modification described later).

(Detection unit 160)

The detection unit 160 according to the present embodiment detects an arbitrary object from the captured images acquired by the acquisition unit 120. The object can be detected using a learning model (object detection model) that has performed learning of the training data in which the captured images are input and the objects are regarded as correct answers.

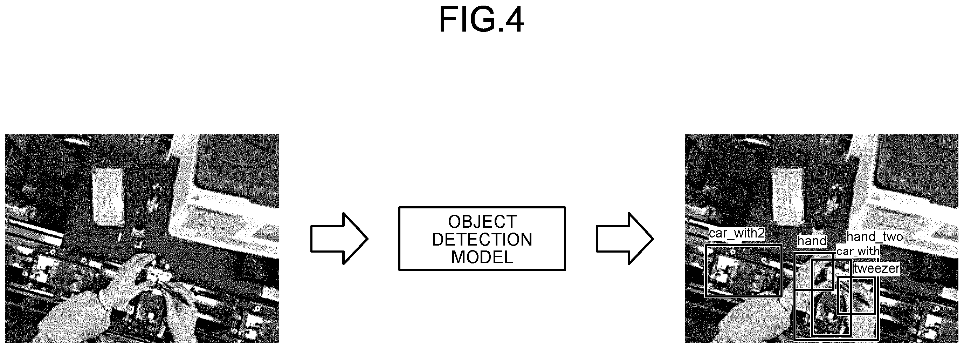

FIG. 4 is a diagram illustrating an example of the object detection model according to the embodiment. As illustrated in FIG. 4, for example, the object is detected by inputting the captured images of the manufacturing work for smartphones to the object detection model, and outputting one or a plurality of objects defining each of a plurality of work states forming one process of the manufacturing work. The example in FIG. 4 illustrates that the object detection model has detected five objects:
"car_with2", "hand", "hand_two", "car_with", and "tweezer" with respect to the captured image. As illustrated in FIG. 4, each of the objects detected is surrounded by a bounding box (frame line), for example, and is displayed with a label indicating an object name. Note that, for example, a Single Shot Multibox Detector (SSD) or You Only Look Once (YOLO) can be used as machine learning for generating this object detection model.

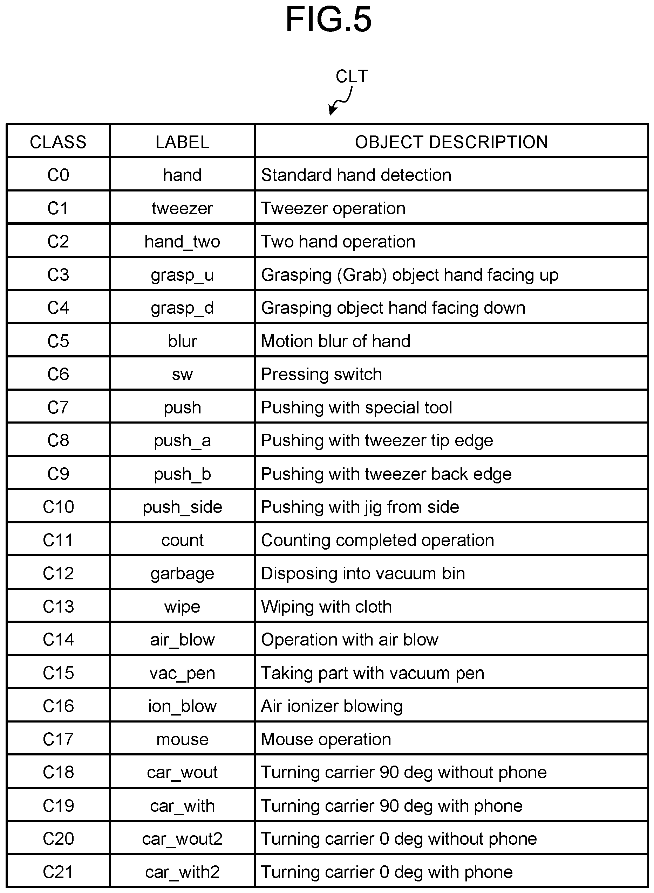

Furthermore, the objects detected are defined in advance, and are stored in the storage unit 110 as, for example, a class table described below. FIG. 5 is a table illustrating an example of the class table according to the present embodiment. As illustrated in FIG. 5, for example, classes C0 to C 21 are set using each of 22 keywords as "labels", and a "class table CLT" associating the class, the label, and object description is generated. The class, the label, and the object description correspond one-to-one to each other.

Returning to FIG. 1, the detection unit 160 detects, for example, an individual worker by a recognition technology such as face recognition with respect to a moving image of the worker captured by a camera device or the like connected to the information processing apparatus 100 in a wired or wireless manner.

(Determination unit 170)

The determination unit 170 according to the present embodiment determines whether or not the worker who works has changed based on the worker detected by the detection unit 160.

(Control unit 180)

The control unit 180 according to the present embodiment is a processing unit that controls the entire information processing apparatus 100, and controls each component included in the information processing apparatus 100. Details of functions of the control unit 180 will be described later.

The functional configuration example of the information processing apparatus 100 according to the present embodiment has been described above. Note that the functional configuration described above with reference to FIG. 1 is merely an example, and the functional configuration of the information processing apparatus 100 according to the present embodiment is not limited thereto. For example, the information processing apparatus 100 may not necessarily include all of the components illustrated in FIG. 1, and can include a part of the functional configuration described above in another apparatus different from the information processing apparatus 100. The functional configuration of the information processing apparatus 100 according to the present embodiment can be flexibly modified according to specifications and operations.

In addition, the function of each component may be performed by reading a control program from a storage medium such as a read only memory (ROM) or a random access memory (RAM) storing the control program in which a process procedure for realizing these functions is described by an arithmetic device such as a central processing unit (CPU), and interpreting and executing the program. Therefore, it is possible to appropriately change the configuration to be used according to a technical level at the time of carrying out the present embodiment. Furthermore, an example of a hardware configuration of the information processing apparatus 100 will be described later.

<<1.2. Details of functions>>

Next, functions of the information processing apparatus 100 according to the present embodiment will be described in detail. In the present embodiment, the reference image is decided from the captured images acquired from the captured moving image of the predetermined work, and the inter-image distance between the reference image and another image of the captured images is calculated. Then, based on each calculated inter-image distance, a plurality of images is selected from the captured images so as to reduce the bias as the training data of machine learning for detecting the object.

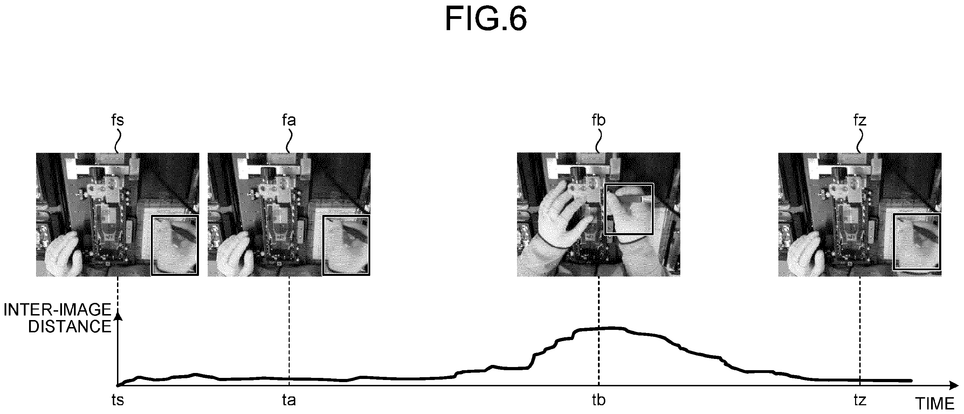

FIG. 6 is a diagram illustrating an example of a graph representing the inter-image distance from the reference image according to the present embodiment. The graph illustrated in FIG. 6 illustrates a graph in which a horizontal axis is time and a vertical axis is the inter-image distance between a reference image fs and each of the captured images. The reference image fs is, for example, an image captured at a work start time ts. As illustrated in FIG. 6, in a captured image fa at a time point immediately after work start ta, there is almost no movement of the worker and the inter-image distance is small as compared with the reference image fs. When the reference image fs and an image similar thereto are collected as the training data of machine learning, either image is sufficient, and a learning effect for two images cannot be expected. The same applies to a captured image fz and the like at a work end time tz because the inter-image distance is small. On the other hand, a captured image fb at a work time point tb has a large inter-image distance from the reference image fs, and is an image to be selected as the training data.

However, although the inter-image distance from the reference image fs is large, only captured images similar to the captured image fb can be collected when the captured images near the work time point tb are collected as training data. The learning effect worth the number of images cannot be expected. Therefore, a method of selecting less biased captured images as the training data will be described.

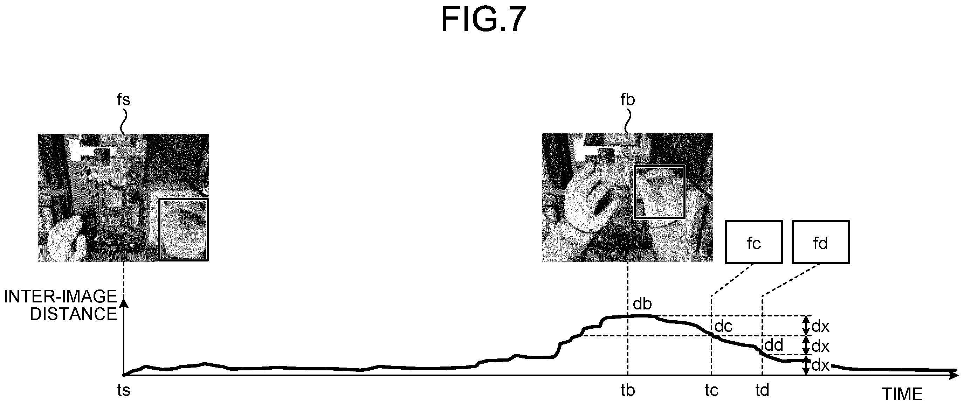

FIG. 7 is a diagram illustrating an example of selection of captured images with less bias as the training data according to the present embodiment. In FIG. 7, it is assumed that the image having the maximum inter-image distance from the reference image fs is the captured image fb at the work time point tb. The inter-image distance between the captured image fb and the reference image fs is defined as db. In addition, the number of captured images desired to be selected as the training data of machine learning is four.

In this case, as illustrated in FIG. 7, the inter-image distance db is divided into three (e.g., three equal parts of a distance dx.), and the captured images fc and fd having a distance same as or closest to the inter-image distances dc and dd at the respective division points are selected. Then, in addition to the captured images fc and fd, the captured image fb and the reference image fs are selected, and therefore a total of four captured images can be selected as the training data. These four captured images are separated from each other with respect to the inter-image distance, and it can be said that there are appropriate variations as the training data.

Note that the number of divisions and the number of images selected at each division point are not limited to the example in FIG. 7, and may be larger or smaller than the example in FIG. 7. In the example in FIG. 7, the captured image having the inter-image distance dc also exists before the time tb. Therefore, when there are a plurality of captured images having the inter-image distance dc, the plurality of captured images may be selected, or any one of the captured images may be selected.

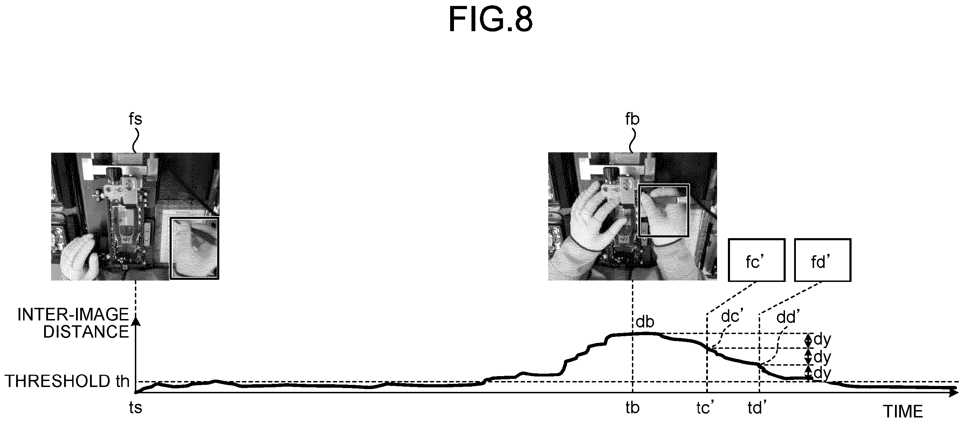

In addition, as illustrated in FIG. 7, since the captured image having a small inter-image distance from the reference image fs tends to be immediately after the start or immediately before the end of the work, it is also possible to provide a threshold for the inter-image distance and select the captured images equal to or more than the threshold so that the captured images close to the start or end are hardly selected. As a result, it is possible to select the captured images farther away from the reference image fs as the training data. FIG. 8 is a diagram illustrating another example of the selection of captured images with less bias as the training data according to the present embodiment. As illustrated in FIG. 8, a threshold th is set for the inter-image distance and a distance between the threshold th and the inter-image distance db is divided. Captured images fc' and fd' having a distance same as or closest to the inter-image distances dc' and dd' at the respective division points are selected. The captured images fc' and fd' have slightly smaller inter-image distances than the captured images fc and fd in FIG. 7, but have larger inter-image distances from the reference image fs. A value of the threshold th to be set may be based on, for example, a proportion of the inter-image distance in the entire captured image.

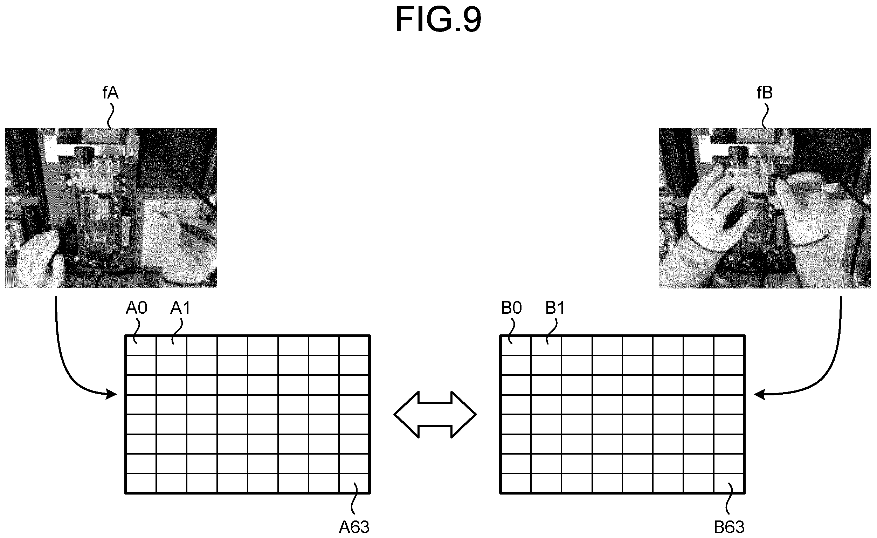

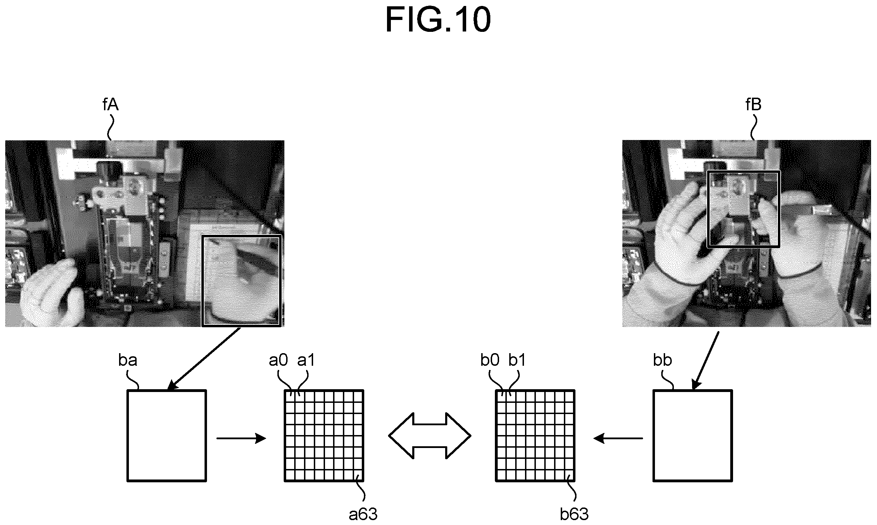

Next, a method of calculating the inter-image distance will be described. The inter-image distance is, for example, a sum of magnitudes of differences in RGB values and luminance values of pixels between images (an example in FIG. 9 described later). Furthermore, in consideration of process efficiency and the like, a difference between average values of the RGB values and luminance values of pixels between images in a predetermined region can be used (an example in FIG. 10 described later).

FIG. 9 is a diagram illustrating an example of the method of calculating the inter-image distance in the entire image according to the present embodiment. As illustrated in FIG. 9, captured images fA and fB for calculating the inter-image distance are divided into, for example, 8 × 8 regions A0 to A63 and B0 to B63, respectively. Note that the number of pixels included in each region may not be equal. The number of divisions of 8 × 8 is an example, and may be larger or smaller than 8 × 8 (e.g., 5 × 5 or 16 × 16). However, when one divided region is larger than the bounding box, there is a case where the inter-image distance cannot be calculated correctly. Therefore, the number of divisions is set such that each region becomes smaller than the bounding box.

Next, average values dAn and dBn (n is an integer between 0 and 63 in FIG. 9) of the RGB values and the luminance values of the pixels in each divided region are calculated. Then, inter-image distance Img_dst_all in the entire image is calculated using the following Expression (1) .

$$\text{Img\_dst\_all} = \sum_{n=0}^{63} \{(dAn - dBn) * (dAn - dBn)\}^{\frac{1}{2}} \qquad (1)$$

Note that upper limit 63 of n in Expression (1) is arbitrarily changed according to the number of divisions of the captured image.

Although the method for calculating the inter-image distance in the entire image has been described above with reference to FIG. 9, the inter-image distance in a region of a background portion where the movement does not occur is substantially close to zero in the case of the entire image. In addition, since this region is a region where a change in the work state hardly occurs, it is difficult to detect the region as the object in the first place. Therefore, it is possible to calculate the inter-image distance in a partial area detected as the object instead of the entire area of image.

FIG. 10 is a diagram illustrating an example of a method of calculating the inter-image distance in a partial image according to the present embodiment. In captured images fA and fB in FIG. 10, partial areas ba and bb in which the detected object is surrounded by the bounding box are illustrated. Similarly to the entire image in FIG. 9, these partial areas ba and bb are divided into, for example, 8 × 8 regions a0 to a63 and b0 to b63, respectively. Note that, similarly to the entire image in FIG. 9, the number of pixels included in each region may not be equal, and the number of divisions may be larger or smaller than 8 × 8.

Next, average values dan and dbn (n is an integer between 0 and 63 in FIG. 10) of the RGB values and the luminance values of pixels in each divided region are calculated. Then, inter-image distance Img_dst_part in the partial image is calculated using the following Expression (2) .

$$\text{Img\_dst\_part} = \sum_{n=0}^{63} \{(dan - dbn) * (dan - dbn)\}^{\frac{1}{2}} \qquad (2)$$

Note that upper limit 63 of n in Expression (2) is also arbitrarily changed according to the number of divisions of the captured image.

The method of calculating the two inter-image distances in the entire image and the partial image has been described above with reference to FIGS. 9 and 10. However, as indicated in the following Expression (3), the two inter-image distances can be totaled to obtain inter-image distance Img_dst_total.

$$\text{Img\_dst\_total} = t * \text{Img\_dst\_all} + (1 - t) * \text{Img\_dst\_part} \qquad (3)$$

A weighting coefficient t in Expression (3) is a numerical value in a range of $0 < t < 1$, and either one of the two inter-image distances between the entire image and the partial image can be weighted by using the weighting coefficient t.

<<1.3. Functional flow>>

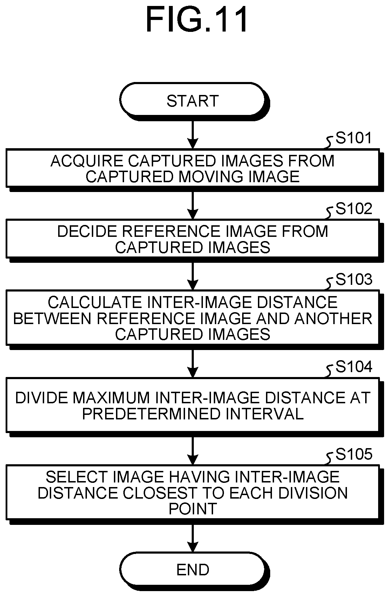

Next, a procedure for selecting captured images with less bias as the training data according to the present embodiment will be described with reference to FIG. 11. FIG. 11 is a flowchart illustrating a flow of a captured image selection process for less bias as the training data according to the present embodiment. This process is for selecting the input images to be used as the training data of machine learning for detecting the object from the captured images based on the inter-image distance of the plurality of captured images acquired from the captured moving image. This process is started, for example, when the user indicates an intention to execute an execution program for this process via an input device connected to the information processing apparatus 100. Alternatively, the process may be executed periodically or by batch processing aperiodically

As illustrated in FIG. 11, first, the acquisition unit 120 of the information processing apparatus 100 acquires the plurality of captured images from the captured moving image of the predetermined work (Step S101). Each of the acquired images is an image for each frame of the captured moving image and may be stored in the storage unit 110 or may be stored in a device, a medium, or the like different from the information processing apparatus 100.

Next, the decision unit 130 of the information processing apparatus 100 decides the reference image serving as a reference from the captured images acquired by the acquisition unit 120 (Step S102). The reference image decided may be, for example, an image captured at the work start when the detection unit 160 detects the object.

Next, the calculation unit 140 of the information processing apparatus 100 calculates the inter-image distance between the reference image decided by the decision unit 130 and each of the captured images other than the reference image acquired by the acquisition unit 120 (Step S103). As described above, the calculated inter-image distance may be inter-image distance Img_dst_all in the entire image, or may be inter-image distance Img_dst_part in the partial image. Alternatively, the calculated inter-image distance may be inter-image distance Img_dst_total according to these two inter-image distances.

Next, the calculation unit 140 divides the calculated maximum inter-image distance at the predetermined interval (Step S104). As described above, for example, when the number of images to be selected as the training data of machine learning is four, the predetermined interval is an interval obtained by dividing the maximum inter-image distance into three equal parts

Next, the selection unit 150 of the information processing apparatus 100 selects the captured images having a distance same as or closest to the inter-image distance at each of the division points obtained by dividing the maximum inter-image distance calculated by the calculation unit 140 at the predetermined interval (Step S105). After Step S105, this process ends.

<2. Modification of embodiment>

<<2.1. First modification >>

Next, modification of the present embodiment will be described. As described above, in the captured images used as the training data of machine learning for detecting the object, it is preferable that the captured images vary and are not similar to each other. Therefore, in the above-described embodiment, non-similar captured images are selected based on the inter-image distance. The first modification described below focuses on a difference in the captured images with respect to a difference in work time during one work, and the captured images to be used as the training data are selected based on the work time.

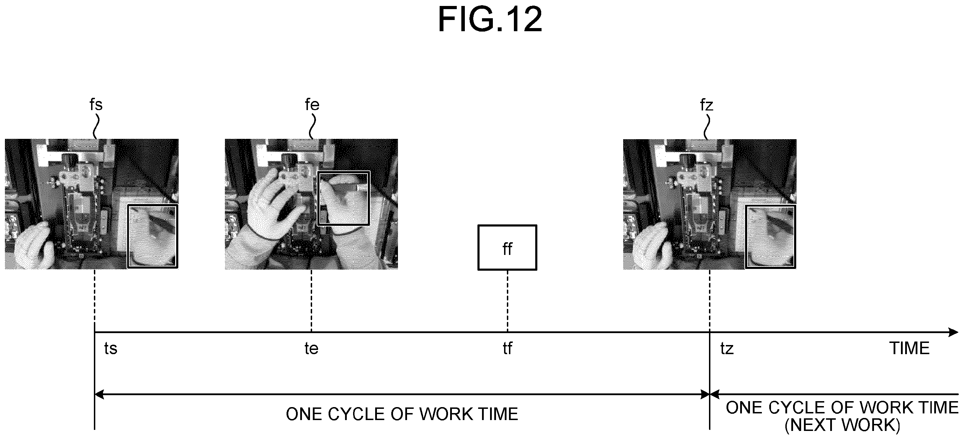

FIG. 12 is a diagram illustrating the first modification to the selection of captured images with less bias as the training data according to the present embodiment. As illustrated in FIG. 12, the selection unit 150 of the information processing apparatus 100 uses the captured image fs at the work start time ts as the reference image, and selects the captured images during work from the work start time ts to the work end time tz. The reference image and the captured images during work can be selected based on the work procedure manual data stored in the storage unit 110 as described later.

In the example in FIG. 12, the captured images fe and ff at two work time points te and tf are selected. Furthermore, the selection unit 150 may further select a captured image fz at the work end time tz. Note that, also in the modification, the selected images are used as the training data of machine learning for detecting the object, and thus the images need to include the object.

The work time of one cycle illustrated in the example in FIG. 12 can be acquired from, for example, the "work time" in the work procedure manual data stored in the storage unit 110. The work start time ts and the work end time tz are derived by the work time, and the captured image fs and the captured image fz at each time point can be selected. In addition, by dividing a duration between the work start time ts and the work end time tz at the predetermined interval, the two work time points te and tf can be derived, and then the captured images fe and ff can be selected. The predetermined interval may or may not be equal intervals. Furthermore, in the example in FIG. 12, the two captured images fe and ff are selected as the captured images during work, but the number of captured images during work to be selected may be more or less than two. In the example in FIG. 12, in addition to the captured images fe and ff during work, the reference image fs and the captured image fz can be selected as the training data of machine learning for detecting the object.

<<2.2. Second modification>>

The second modification described below focuses on the fact that, even in the same work process, the captured images are different when the workers are different, and the worker is detected to select the captured images to be used as the training data when the worker who is working is changed.

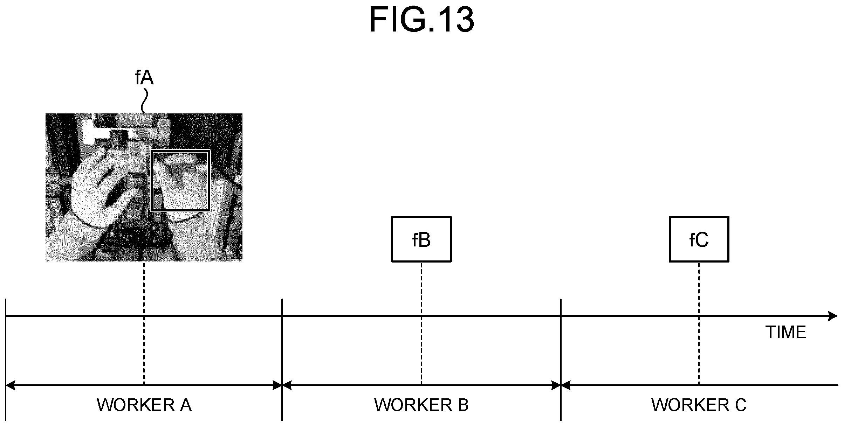

FIG. 13 is a diagram illustrating the second modification to the selection of captured images with less bias as the training data according to the present embodiment. As illustrated in FIG. 13, in a case where the same work process is alternately performed by workers A, B, and C, the detection unit 160 of the information processing apparatus 100 detects individual workers by the recognition technology such as face recognition with respect to the captured moving images of the workers A, B, and C. Then, based on the detected workers, the determination unit 170 of the information processing apparatus 100 determines whether or not the worker who is working has changed.

Next, when it is determined that the worker has changed, the selection unit 150 of the information processing apparatus 100 selects the input images to be used as the training data of machine learning from the captured images including the object after a time point at which it is determined that the worker has changed. Accordingly, captured images fB and fC can be selected. In addition, the captured image fA can be selected from the captured images including the object before the time point at which it is determined that the worker has changed.

Note that the captured images at which time point on and before or after the time point at which the worker is determined to have changed can be selected, for example, by dividing the time at the predetermined interval according to the number of images to be selected.

Although the first and second modifications of the present embodiment have been described above, they do not need to be implemented separately, and may be implemented in a combined manner. For example, when it is determined that the worker has changed, a time point at which it is determined that the worker has changed is set as the reference image, and the inter-image distances of subsequent captured images from the reference image are calculated. Then, the input images to be used as the training data of machine learning can be selected based on the inter-image distances.

<3. Hardware configuration example>

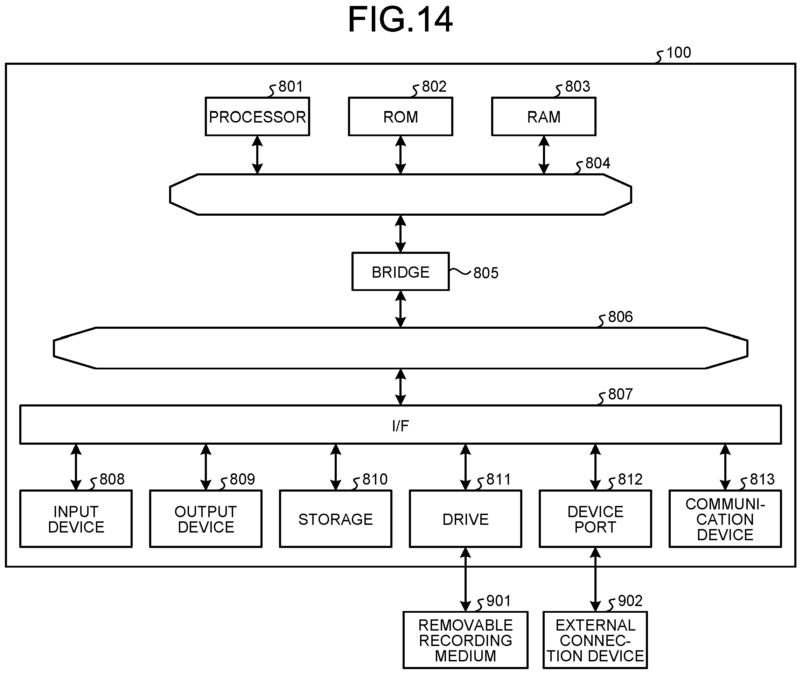

Next, a hardware configuration example of the information processing apparatus 100 according to the present embodiment will be described. FIG. 14 is a block diagram illustrating a hardware configuration example of the information processing apparatus 100 according to the present embodiment. As illustrated in FIG. 14, the information processing apparatus 100 includes, for example, a processor 801, a ROM 802, a RAM 803, a host bus 804, a bridge 805, an external bus 806, an interface 807, an input device 808, an output device 809, a storage 810, a drive 811, a connection port 812, and a communication device 813. Note that the hardware configuration illustrated here is an example, and some of the components may be omitted. In addition, components other than the components illustrated here may be further included.

(Processor 801)

The processor 801 functions as, for example, an arithmetic processor or a controller, and controls the overall operation of each component or a part thereof based on various programs recorded in the ROM 802, the RAM 803, the storage 810, or a removable recording medium 901.

(ROM 802 and RAM 803)

The ROM 802 is a unit that stores a program read by the processor 801, data used for calculation, and the like. The RAM 803 temporarily or permanently stores, for example, a program read by the processor 801, various parameters that appropriately change when the program is executed, and the like.

(Host bus 804, bridge 805, external bus 806, and interface 807)

The processor 801, the ROM 802, and the RAM 803 are mutually connected via, for example, the host bus 804 capable of high-speed data transmission. On the other hand, the host bus 804 is connected to the external bus 806 having a relatively low data transmission speed via, for example, the bridge 805. In addition, the external bus 806 is connected to various components via the interface 807.

(Input device 808)

As the input device 808, for example, a mouse, a keyboard, a touch panel, a button, a switch, a lever, and the like are used. Furthermore, as the input device 808, a remote controller (hereinafter, remote control) capable of transmitting a control signal using infrared rays or other radio waves may be used. Furthermore, the input device 808 includes a voice input device such as a microphone.

(Output device 809)

The output device 809 is a device capable of visually or audibly notifying a user of acquired information, including a display device such as a cathode ray tube (CRT), a liquid crystal display (LCD), or an organic electroluminescence light (EL), an audio output device such as a speaker or a headphone, a printer, a mobile phone, or a facsimile. Furthermore, the output device 809 according to the present embodiment includes various vibrating devices capable of outputting tactile stimulation.

(Storage 810)

The storage 810 is a device for storing various types of data. As the storage 810, for example, a magnetic storage device such as a hard disk drive (HDD), a semiconductor storage device, an optical storage device, or a magneto-optical storage device is used.

(Drive 811)

The drive 811 is, for example, a device that reads information recorded on the removable recording medium 901 such as a magnetic disk, an optical disk, a magneto-optical disk, or a semiconductor memory, or writes information to the removable recording medium 901.

(Connection port 812)

The connection port 812 is a port for connecting an external connection device 902 such as a universal serial bus (USB) port, an IEEE 1394 port, a small computer system interface (SCSI), an RS-232 C port, or an optical audio terminal.

(Communication device 813)

The communication device 813 is a communication device for connecting to a network, and is, for example, a communication card for wired or wireless LAN, Bluetooth (registered trademark), or wireless USB (WUSB), a router for optical communication, a router for asymmetric digital subscriber line (ADSL), a modem for various communications, or the like.

(Removable recording medium 901)

The removable recording medium 901 is, for example, a DVD medium, a Blu-ray (registered trademark) medium, an HD DVD medium, or various semiconductor storage media. It is obvious that the removable recording medium 901 may also be, for example, an IC card on which a non-contact IC chip is mounted or an electronic device.

(External connection device 902)

The external connection device 902 is, for example, a printer, a portable music player, a digital camera, a digital video camera, or an IC recorder.
Note that the storage unit 110 according to the present embodiment is realized by the ROM 802, the RAM 803, and the storage 810. Furthermore, the processor 801 causes the control unit 180 according to the present embodiment to execute reading of each control program, from the ROM 802, the R_AM 803, and the like, for realizing the acquisition unit 120, the decision unit 130, the calculation unit 140, the selection unit 150, the detection unit 160, and the determination unit 170.

<4. Summary>

As described above, the information processing apparatus 100 includes the acquisition unit 120 that acquires the plurality of captured images from the captured moving image of the predetermined work, the decision unit 130 that decides the reference image serving as the reference from the captured images, the calculation unit 140 that calculates the first inter-image distance between the reference image and another image of the captured images, and the selection unit 150 that selects the input images to be used as the training data of machine learning from the captured images based on the first inter-image distance.

As a result, less biased training data can be efficiently collected from the captured moving image.

Although the preferred embodiments of the present disclosure have been described in detail with reference to the accompanying drawings, the technical scope of the present disclosure is not limited to the embodiments. It is obvious that a person having ordinary knowledge in the technical field of the present disclosure can conceive various changes or modifications within the scope of the technical idea described in the claims, and it is naturally understood that these also belong to the technical scope of the present disclosure.

Furthermore, the effects described in the present specification are merely illustrative or exemplary, and are not restrictive. In other words, the technology according to the present disclosure can exhibit other effects obvious to those skilled in the art from the description of the present specification in addition to or instead of the above effects.

Note that the present technology can also have the following configurations.

Reference Signs List

100    INFORMATION PROCESSING APPARATUS
110    STORAGE UNIT
120    ACQUISITION UNIT
130    DECISION UNIT
140    CALCULATION UNIT
150    SELECTION UNIT
160    DETECTION UNIT
170    DETERMINATION UNIT
180    CONTROL UNIT

**Claims**

1. An information processing apparatus comprising:

   an acquisition unit configured to acquire a plurality of captured images from a captured moving image of a predetermined work;
   a decision unit configured to decide a reference image serving as a reference from the plurality of captured images;
   a calculation unit configured to calculate a first inter-image distance between the reference image and another image of the plurality of captured images; and
   a selection unit configured to select an input image to be used as training data of machine learning from the plurality of captured images, the input image being selected based on the first inter-image distance.

2. The information processing apparatus according to claim 1, wherein

   the calculation unit further calculates a second inter-image distance from the reference image by dividing a maximum value of the first inter-image distance at a predetermined interval, and
   the selection unit selects, from the plurality of captured images, an image having a distance same as or closest to the second inter-image distance as the input image.

3. The information processing apparatus according to claim 1, wherein

   the calculation unit further calculates a second inter-image distance from the reference image by dividing a maximum value of the first inter-image distance in a range of a predetermined threshold or above at a predetermined interval, and
the selection unit selects, from the plurality of captured images, an image having a distance same as or closest to the second inter-image distance as the input image.

4. The information processing apparatus according to claim 1, further comprising a detection unit configured to detect an object from the plurality of captured images, wherein

the decision unit further
decides a predetermined range including the object detected in the reference image as a first partial image, and
decides a predetermined range including the object detected in the another image as a second partial image, and
the calculation unit calculates the first inter-image distance between the first partial image and the second partial image.

5. The information processing apparatus according to claim 1, further comprising a detection unit configured to detect an object from the plurality of captured images, wherein

the decision unit further
decides a predetermined range including the object detected in the reference image as a first partial image, and
decides a predetermined range including the object detected in the another image as a second partial image, and
the calculation unit calculates the first inter-image distance based on a third inter-image distance between an entire area of one of the plurality of captured images and an entire area of the another image and a fourth inter-image distance between the first partial image and the second partial image.

6. An information processing apparatus comprising:

an acquisition unit configured to acquire a plurality of captured images from a captured moving image of a predetermined work;
a decision unit configured to decide, from the plurality of captured images, one of the plurality of captured images corresponding to a start time of the predetermined work, according to a predetermined work procedure manual, as a reference image;
a detection unit configured to detect an object from the plurality of captured images; and
a selection unit configured to select an input image to be used as training data of machine learning from the plurality of captured images including the object between the start time and an end time of the predetermined work according to the work procedure manual.

7. An information processing apparatus comprising:

an acquisition unit configured to acquire a plurality of captured images from a captured moving image of a predetermined work;
a detection unit configured to detect a worker of the predetermined work, and
detect an object from the plurality of captured images;
a determination unit configured to determine whether the worker has changed; and
a selection unit configured to select, in a case where it is determined that the worker has changed, an input image to be used as training data of machine learning from the plurality of captured images including the object at and after a time point at which it is determined that the worker has changed.

8. A program causing an information processing apparatus to execute:

acquiring a plurality of captured images from a captured moving image of a predetermined work;
deciding a reference image serving as a reference from the plurality of captured images;
calculating a first inter-image distance between the reference image and another image of the plurality of captured images; and
selecting an input image to be used as training data of machine learning from the plurality of captured images, the input image being selected based on the first inter-image distance.

9. A method using an information processing apparatus to implement:

acquiring a plurality of captured images from a captured moving image of a predetermined work;

deciding a reference image serving as a reference from the plurality of captured images;

calculating a first inter-image distance between the reference image and another image of the plurality of captured images; and

selecting an input image to be used as training data of machine learning from the plurality of captured images, the input image being selected based on the first inter-image distance.

10. A program causing an information processing apparatus to execute:

acquiring a plurality of captured images from a captured moving image of a predetermined work according to a predetermined work procedure manual;

deciding, from the plurality of captured images, one of the plurality of captured images corresponding to a start time of the predetermined work, according to the work procedure manual, as a reference image;

detecting an object from the plurality of captured images; and

selecting an input image to be used as training data of machine learning from the plurality of captured images including the object between the start time and an end time of the predetermined work according to the work procedure manual.

11. A method using an information processing apparatus to implement:

acquiring a plurality of captured images from a captured moving image of a predetermined work according to a predetermined work procedure manual;

deciding, from the plurality of captured images, one of the plurality of captured images corresponding to a start time of the predetermined work, according to the work procedure manual, as a reference image;

detecting an object from the plurality of captured images; and

selecting an input image to be used as training data of machine learning from the plurality of captured images including the object between the start time and an end time of the predetermined work according to the work procedure manual.

12. A program causing an information processing apparatus to execute:

acquiring a plurality of captured images from a captured moving image of a predetermined work;

detecting a worker of the predetermined work;

detecting an object from the plurality of captured images;

determining whether the worker has changed; and

selecting, in a case where it is determined that the worker has changed, an input image to be used as training data of machine learning from the plurality of captured images including the object at and after a time point at which it is determined that the worker has changed.

13. A method using an information processing apparatus to implement:

acquiring a plurality of captured images from a captured moving image of a predetermined work;

detecting a worker of the predetermined work;

detecting an object from the plurality of captured images;

determining whether the worker has changed; and

selecting, in a case where it is determined that the worker has changed, an input image to be used as training data of machine learning from the plurality of captured images including the object at and after a time point at which it is determined that the worker has changed.

# FIG.1

```
                                                                    ⌐100
┌──────────────────────────────────────────────────────────────────────┐
│                                                                        │
│     ⌐110                 ⌐120                    ⌐130                   │
│  ┌──────────────┐   ┌──────────────┐      ┌──────────────┐             │
│  │ STORAGE UNIT │   │ ACQUISITION  │      │ DECISION UNIT│             │
│  │              │   │    UNIT      │      │              │             │
│  └──────────────┘   └──────────────┘      └──────────────┘             │
│          ▲                  ▲                      ▲                    │
│          │                  │        ⌐180          │                   │
│     ⌐140 │                  ▼         │            │        ⌐150       │
│  ┌──────────────┐   ┌──────────────┐      ┌──────────────┐             │
│  │ CALCULATION  │◄─►│ CONTROL UNIT │◄────►│SELECTION UNIT│             │
│  │    UNIT      │   │              │      │              │             │
│  └──────────────┘   └──────────────┘      └──────────────┘             │
│          │                  ▲                                          │
│          ▼             ⌐160 ▼        ⌐170                              │
│  ┌──────────────┐   ┌──────────────┐                                   │
│  │DETECTION UNIT│   │ DETERMINATION│                                   │
│  │              │   │    UNIT      │                                   │
│  └──────────────┘   └──────────────┘                                   │
│                                                                        │
└──────────────────────────────────────────────────────────────────────┘
```

# FIG.2

| WORK PROCESS NUMBER | 5 |
|---|---|
| WORK PROCESS NAME | SPEAKER ATTACHMENT |
| WORK PROCESS TIME | 22 SECONDS |

| WORK NUMBER | WORK NAME | WORK DESCRIPTION | WORK TIME (S) |
|---|---|---|---|
| 1 | MOVEMENT | PICK BY HAND SMARTPHONE FROM PART STORAGE AT LEFT END, AND MOVE IT TO ROBOT AT FRONT | 2 |
| 2 | PLACEMENT | HOLD BY HAND MOVED SMARTPHONE FACING DOWN AND PLACE IT ON ROBOT IN FRONT OF WORKPLACE | 3 |
| 3 | SWITCHING | PRESS BY HAND GREEN SWITCH AT RIGHT FRONT OF WORKPLACE | 2 |
| 4 | SPEAKER MOVEMENT | HOLD AND MOVE BY HAND SPEAKER IN PART STORAGE AT RIGHT END | 2 |
| 5 | DUST REMOVAL | HOLD COMPONENT A WITH ONE HAND, HOLD AIR BLOWER WITH THE OTHER HAND, AND REMOVE COMPONENT A | 5 |
| 6 | STICKER ATTACHMENT | REMOVE BY HAND BLUE STICKER FROM FRONT OF WORKPLACE AND ATTACH IT TO COMPONENT | 3 |
| 7 | SPEAKER INSTALLATION | HOLD BY HAND SPEAKER AND INSTALL IT IN SMARTPHONE | 3 |
| 8 | WORK CARRIER ROTATION | ROTATE BY HAND WORK CARRIER TO ZERO DEGREES | 2 |

# FIG.3

| TEXT DATA EXTRACTION | MORPHOLOGICAL ANALYSIS | KEYWORD EXTRACTION | KEYWORD CONVERSION |
|---|---|---|---|
| "PICK BY HAND SMARTPHONE FROM PART STORAGE AT LEFT END, AND MOVE IT TO ROBOT AT FRONT" | LEFT END PART STORAGE SMARTPHONE HAND PICK FRONT ROBOT MOVE | HAND | "hand" |

⋮ ⋮ ⋮ ⋮

| PRESS BY HAND GREEN SWITCH AT RIGHT FRONT OF WORKPLACE | WORKPLACE RIGHT SIDE SWITCH GREEN HAND | SWITCH HAND | "sw" "hand" |

# FIG.4

# FIG.5

CLT

| CLASS | LABEL | OBJECT DESCRIPTION |
|---|---|---|
| C0 | hand | Standard hand detection |
| C1 | tweezer | Tweezer operation |
| C2 | hand_two | Two hand operation |
| C3 | grasp_u | Grasping (Grab) object hand facing up |
| C4 | grasp_d | Grasping object hand facing down |
| C5 | blur | Motion blur of hand |
| C6 | sw | Pressing switch |
| C7 | push | Pushing with special tool |
| C8 | push_a | Pushing with tweezer tip edge |
| C9 | push_b | Pushing with tweezer back edge |
| C10 | push_side | Pushing with jig from side |
| C11 | count | Counting completed operation |
| C12 | garbage | Disposing into vacuum bin |
| C13 | wipe | Wiping with cloth |
| C14 | air_blow | Operation with air blow |
| C15 | vac_pen | Taking part with vacuum pen |
| C16 | ion_blow | Air ionizer blowing |
| C17 | mouse | Mouse operation |
| C18 | car_wout | Turning carrier 90 deg without phone |
| C19 | car_with | Turning carrier 90 deg with phone |
| C20 | car_wout2 | Turning carrier 0 deg without phone |
| C21 | car_with2 | Turning carrier 0 deg with phone |

# FIG.6

EP 4 130 904 A1

# FIG.7

EP 4 130 904 A1

# FIG.8

# FIG.9

fA

fB

A0  A1

B0  B1

A63

B63

EP 4 130 904 A1

FIG.10

# FIG.11

START

S101

ACQUIRE CAPTURED IMAGES FROM CAPTURED MOVING IMAGE

S102

DECIDE REFERENCE IMAGE FROM CAPTURED IMAGES

S103

CALCULATE INTER-IMAGE DISTANCE BETWEEN REFERENCE IMAGE AND ANOTHER CAPTURED IMAGES

S104

DIVIDE MAXIMUM INTER-IMAGE DISTANCE AT PREDETERMINED INTERVAL

S105

SELECT IMAGE HAVING INTER-IMAGE DISTANCE CLOSEST TO EACH DIVISION POINT

END

# FIG.12

EP 4 130 904 A1

fs    fe                              fz

ff

ts          te          tf          tz          TIME

|←——————————— ONE CYCLE OF WORK TIME ———————————→|←— ONE CYCLE OF WORK TIME
                                                      (NEXT WORK)

# FIG.13

fA

fB

fC

TIME

|←———— WORKER A ————→|←———— WORKER B ————→|←———— WORKER C ————→|

EP 4 130 904 A1

FIG.14

## INTERNATIONAL SEARCH REPORT

International application No.

PCT/JP2020/013460

### A. CLASSIFICATION OF SUBJECT MATTER
G05B 19/418(2006.01)i
FI: G05B19/418 Z

According to International Patent Classification (IPC) or to both national classification and IPC

### B. FIELDS SEARCHED

Minimum documentation searched (classification system followed by classification symbols)
G05B19/418

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2018-163556 A (MITSUBISHI HEAVY INDUSTRIES, LTD.) 18 October 2018 (2018-10-18) in particular, paragraphs [0018]-[0020], [0033] | 1-13 |
| Y | JP 2018-163527 A (SCREEN HOLDINGS CO., LTD.) 18 October 2018 (2018-10-18) in particular, paragraphs [0032]-[0033] | 1-13 |
| Y | JP 2019-12321 A (FUJITSU LTD.) 24 January 2019 (2019-01-24) in particular, paragraphs [0018], [0023] | 6,10-11 |
| Y | JP 2017-228160 A (PANASONIC IP MANAGEMENT CO., LTD.) 28 December 2017 (2017-12-28) in particular, paragraphs [0038], [0047] | 7,12-13 |
| A | JP 2019-174940 A (NGR INC.) 10 October 2019 (2019-10-10) entire text, all drawings | 1-13 |

☒ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 June 2020 (09.06.2020) | 23 June 2020 (23.06.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

## INTERNATIONAL SEARCH REPORT

International application No.

PCT/JP2020/013460

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2020-24534 A (JAPAN BROADCASTING CORPORATION) 13 February 2020 (2020-02-13) entire text, all drawings | 1-13 |
| A | JP 2019-204258 A (PASCO CORPORATION) 28 November 2019 (2019-11-28) entire text, all drawings | 1-13 |
| A | JP 2019-29021 A (NARA INSTITUTE OF SCHIENCE AND TECHNOLOGY) 21 February 2019 (2019-02-21) entire text, all drawings | 1-13 |
| A | JP 2019-193019 A (CANON INC.) 31 October 2019 (2019-10-31) entire text, all drawings | 1-13 |

Form PCT/ISA/210 (continuation of second sheet) (January 2015)

International application No.

PCT/JP2020/013460

| Patent Documents referred in the Report | Publication Date | Patent Family | Publication Date |
|---|---|---|---|
| JP 2018-163556 A | 18 Oct. 2018 | (Family: none) | |
| JP 2018-163527 A | 18 Oct. 2018 | (Family: none) | |
| JP 2019-12321 A | 24 Jan. 2019 | (Family: none) | |
| JP 2017-228160 A | 28 Dec. 2017 | US 2017/0372694 A1 in particular, paragraphs [0052], [0061] EP 3260995 A1 CN 107545397 A | |
| JP 2019-174940 A | 10 Oct. 2019 | WO 2019/188009 A1 | |
| JP 2020-24534 A | 13 Feb. 2020 | (Family: none) | |
| JP 2019-204258 A | 28 Nov. 2019 | (Family: none) | |
| JP 2019-29021 A | 21 Feb. 2019 | (Family: none) | |
| JP 2019-193019 A | 31 Oct. 2019 | (Family: none) | |

Form PCT/ISA/210 (patent family annex) (January 2015)

**EP 4 130 904 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018163556 A
- JP 2019101516 A